# EUROPEAN PATENT APPLICATION

(11) **EP 4 852 542 A1**
(43) Date of publication of application: **09.12.2026**
(21) Application number: 24921484.2
(22) Date of filing: 29.09.2024
(51) Int. Cl.: H04W 52/24

(54) **POWER INFORMATION CONFIGURATION METHOD AND APPARATUS, AND POWER INFORMATION ACQUISITION METHOD AND APPARATUS**

(30) Priority: 30.01.2024 CN 202410135074
(71) Applicant: ZTE CORPORATION, Shenzhen, Guangdong 518057 (CN)
(72) Inventor: LIU, Wenhao, Shenzhen, Guangdong 518057 (CN); ZHANG, Chenchen, Shenzhen, Guangdong 518057 (CN); XUE, Fei, Shenzhen, Guangdong 518057 (CN); ZHOU, Wubin, Shenzhen, Guangdong 518057 (CN)
(74) Representative: Deambrogi, Edgardo
(86) International application number: PCT/CN2024/122485
(87) International publication number: WO 2025/161460

(57) **Abstract**

Provided are a method and apparatus for configuring power information, a method and apparatus for acquiring power information. The method includes: sending, to a second node, power information and/or path loss information of one or more frequency domain units, which can solve the problem that a receiver needs additional time-frequency resources to adjust power settings.

## Description

### Cross-Reference to Related Application

The present disclosure is based on and claims the benefit of priority of Chinese Patent Application No. CN202410135074X, filed on January 30, 2024 and entitled "Method and Apparatus for Configuring Power Information, Method and Apparatus for Acquiring Power Information", the disclosure of which is incorporated herein by reference in its entirety.

### Technical Field

Embodiments of the present disclosure relate to the technical field of communications, and in particular, to a method and apparatus for configuring power information, a method and apparatus for acquiring power information.

### Background

In a communication network, a solution for achieving high-rate data transmission is to send data to a node over multiple component carriers (CCs). However, for a receiver, reception powers of different carriers may differ, and the receiver needs to ensure that it can correctly receive data of each carrier.

No solution has been proposed for the problem in the related art of how a receiver can correctly receive data of multiple carriers without consuming time-frequency resources to perform power adjustment.

### Summary

The present disclosure provides a method and apparatus for configuring power information, a method and apparatus for acquiring power information, so as to at least solve the problem in the related art of how a receiver can correctly receive data of multiple carriers without consuming time-frequency resources to perform power adjustment.

According to one embodiment of the present disclosure, a method for configuring power information is provided, applied to a first node, the method including: sending, to a second node, at least one of: power information of one or more frequency domain units, and path loss information of one or more frequency domain units.

According to another embodiment of the present disclosure, a method for acquiring power information is further provided, applied to a second node, the method including: receiving power information of one or more frequency domain units notified by a first node; and/or receiving path loss information of one or more frequency domain units notified by the first node.

According to another embodiment of the present disclosure, an apparatus for configuring power information is further provided, applied to a first node, the apparatus including: a power information sending module, configured to send, to a second node, at least one of: power information of one or more frequency domain units, and path loss information of one or more frequency domain units.

According to another embodiment of the present disclosure, an apparatus for acquiring power information is further provided, applied to a second node, the apparatus including: a power information receiving module, configured to receive power information of one or more frequency domain units notified by a first node; and/or receive path loss information of one or more frequency domain units notified by the first node.

According to yet another embodiment of the present disclosure, a computer-readable storage medium is further provided, the storage medium having a computer program stored therein, wherein the computer program is configured to, when running, execute steps of the method in any of the above method embodiments.

According to yet another embodiment of the present disclosure, an electronic device is further provided, including a memory and a processor, the memory having a computer program stored therein, the processor being configured to run the computer program to execute steps of the method in any of the above method embodiments.

According to yet another embodiment of the present disclosure, a computer program product is further provided, including computer program instructions, wherein the computer program instructions cause a computer to implement steps of the method in any of the above method embodiments.

### Brief Description of the Drawings

FIG. 1 is a hardware structure block diagram of a computer device for the method for configuring power information according to an embodiment of the present disclosure;
FIG. 2 is a flowchart of the method for configuring power information according to an embodiment of the present disclosure;
FIG. 3 is a flowchart of power information transmission according to an embodiment of the present disclosure;
FIG. 4 is a flowchart of power information request according to an embodiment of the present disclosure;
FIG. 5 is a flowchart of capability information reporting according to an embodiment of the present disclosure;
FIG. 6 is a schematic diagram of frequency domain units according to the present embodiment;
FIG. 7 is a first flowchart of power information notification according to the present embodiment;
FIG. 8 is a second flowchart of power information notification according to the present embodiment;
FIG. 9 is a third flowchart of power information notification according to the present embodiment;
FIG. 10 is a fourth flowchart of power information notification according to the present embodiment;
FIG. 11 is a fifth flowchart of power information notification according to the present embodiment;
FIG. 12 is a schematic diagram of correspondence between frequency domain units and power information according to the present embodiment;
FIG. 13 is a sixth flowchart of power information notification according to the present embodiment;
FIG. 14 is a seventh flowchart of power information notification according to the present embodiment;
FIG. 15 is a first schematic diagram of power information notification according to the present embodiment;
FIG. 16 is a second schematic diagram of power information notification according to the present embodiment;
FIG. 17 is a third schematic diagram of power information notification according to the present embodiment;
FIG. 18 is a flowchart of the method for acquiring power information according to an embodiment of the present disclosure;
FIG. 19 is a schematic diagram of path loss measurement according to the present embodiment;
FIG. 20 is a block diagram of the apparatus for configuring power information according to an embodiment of the present disclosure;
FIG. 21 is a block diagram of the apparatus for acquiring power information according to an embodiment of the present disclosure.

### Detailed Description of the Embodiments

Embodiments of the present disclosure will be described in detail below with reference to the accompanying drawings.

It should be noted that the terms "first," "second," etc. in the description and claims of the present disclosure and in the above drawings are used to distinguish similar objects and are not necessarily used to describe a specific order or sequence.

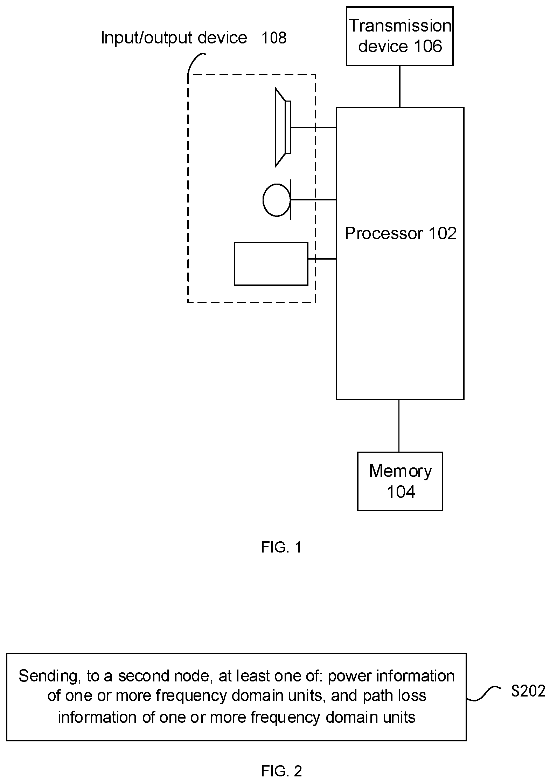

The method embodiments provided in the embodiments of the present disclosure may be executed in a computer device or a similar computing apparatus. Taking execution on a computer device as an example, FIG. 1 is a hardware structure block diagram of a computer device for the method for configuring power information according to an embodiment of the present disclosure. As shown in FIG. 1, the computer device may include one or more (only one is shown in FIG. 1) processors 102 (the processors 102 may include but are not limited to processing devices such as a microprocessor MCU or a programmable logic device) and a memory 104 for storing data, wherein the computer device may further include a transmission device 106 for communication functions and an input/output device 108. Those of ordinary skill in the art will appreciate that the structure shown in FIG. 1 is only illustrative and does not limit the structure of the computer device. For example, the computer device may include more or fewer components than those shown in FIG. 1, or have a configuration different from that shown in FIG. 1.

The memory 104 may be used to store a computer program, for example, software programs and modules of application software, such as a computer program corresponding to the method for configuring power information in the embodiments of the present disclosure. The processor 102 executes the computer program stored in the memory 104, thereby performing various functional applications and board matching, i.e., implementing the above method. The memory 104 may include high-speed random access memory, and may also include non-volatile memory, such as one or more magnetic storage devices, flash memory, or other non-volatile solid-state memory. In some examples, the memory 104 may further include memory remotely located relative to the processor 102, and such remote memory may be connected to the computer device via a network. Examples of the above network include, but are not limited to, the Internet, an intranet, a local area network, a mobile communication network, and combinations thereof.

The transmission device 106 is configured to receive or send data via a network. Specific examples of the above network may include a wireless network provided by a communication provider of the computer device. In one example, the transmission device 106 includes a network adapter (Network Interface Controller, NIC), which may be connected to other network devices via a base station to communicate with the Internet. In one example, the transmission device 106 may be a Radio Frequency (RF) module, which is configured to communicate with the Internet wirelessly.

In the present embodiment, a method for configuring power information running on the above computer device is provided. FIG. 2 is a flowchart of the method for configuring power information according to an embodiment of the present disclosure. As shown in FIG. 2, applied to a first node, the process includes the following step:
step S202, sending, to a second node, at least one of: power information of one or more frequency domain units, and path loss information of one or more frequency domain units.

Through the above step S202, the problem in the related art that a receiver needs time-frequency resources to adjust power settings can be solved. By notifying the power information and/or path loss information to the second node, the second node can receive data of one or multiple carriers without consuming time-frequency resources for power setting.

In the present embodiment, the above step S202 may specifically include: in response to a first request message for the power information of the one or more frequency domain units sent by the second node, sending, to the second node, the power information of the one or more frequency domain units; or sending, to the second node, the power information of the one or more frequency domain units; or in response to a second request message for the path loss information of the one or more frequency domain units sent by the second node, sending, to the second node, the path loss information of the one or more frequency domain units; or sending, to the second node, the path loss information of the one or more frequency domain units.

In the present embodiment, the power information is actual power information or a power offset relative to a reference frequency domain unit; the path loss information is actual path loss information or a path loss offset relative to the reference frequency domain unit.

In the present embodiment, the reference frequency domain unit is a frequency domain unit for transmitting and receiving data with the second node; or the reference frequency domain unit is a frequency domain unit of a primary cell of the second node; or the reference frequency domain unit is a frequency domain unit of a cell having a smallest or largest component carrier index among the plurality of frequency domain units.

In one embodiment, the method further includes: receiving a third request message for the reference frequency domain unit sent by the second node, and notifying the reference frequency domain unit to the second node, wherein the third request message carries identification information of the reference frequency domain unit; or receiving a fourth request message for the reference frequency domain unit sent by the second node, wherein the fourth request message carries identification information of the reference frequency domain unit, i.e., after receiving the fourth request message, no notification to the second node is required; or notifying the reference frequency domain unit to the second node.

In another embodiment, the method further includes: receiving capability information sent by the second node, wherein the capability information indicates whether the second node needs time-frequency resources to perform power adjustment training for the one or more frequency domain units before performing power adjustment on the one or more frequency domain units.

In the present embodiment, the power information is power information associated with at least one of: a beam, a time unit, a modulation scheme, a waveform, a signal/channel, a MIMO rank, and a transmission mode.

In the present embodiment, the modulation scheme includes at least one of: Binary Phase Shift Keying (BPSK for short), Quadrature Phase Shift Keying (QPSK for short), 16QAM, 64QAM, 256QAM, 1024QAM, and 4096QAM; the waveform includes at least one of: Orthogonal Time Frequency Space (OTFS for short), Discrete Fourier Transform-spread-Orthogonal Frequency Division Multiplexing (DFT-s-OFDM for short), Cyclic Prefix Orthogonal Frequency Division Multiplexing (CP-OFDM for short), and other OFDM-based waveforms; the time unit includes at least one of: one or several slots, one or several OFDM symbols, one or several subframes, one or several radio frames, a time period, and one or more time units defined in a frame structure definition; the transmission mode includes at least one of: diversity transmission, multiplexing transmission, Single User MIMO (SU-MIMO for short) transmission, Multi-User MIMO (MU-MIMO for short) transmission, Cyclic Delay Diversity (CDD for short) transmission, and non-CDD transmission.

In the present embodiment, the power information includes at least one of: Transmit Power (TP), Power Spectrum Density (PSD), Effective Isotropic Radiated Power (EIRP), and Energy Per Resource Element (EPRE); and/or the frequency domain unit includes at least one of: one or more frequency bands, one or more component carriers, one or more Resource Blocks (RBs), one or more subcarrier spacings, and frequency domain resources corresponding to a serving cell.

In the present embodiment, the one or more frequency domain units are frequency domain units in a request message sent by the second node; and/or the power information is grouping information, the grouping information including one or more frequency domain unit groups, each frequency domain unit group including one or more frequency domain units, power of frequency domain units in a group is identical, or a power difference between any two frequency domain units in a group is less than a first preset value; and/or the path loss information is grouping information, the grouping information including one or more frequency domain unit groups, each frequency domain unit group including one or more frequency domain units, path loss of frequency domain units in a group is identical, or a path loss difference between any two frequency domain units in a group is less than a second preset value.

In the related art, Automatic Gain Control (AGC for short) adjustment is performed on one or multiple carriers separately. A problem with this approach is that it requires a certain amount of radio resources and time for AGC adjustment for each of the one or multiple carriers. The power information in the present embodiment is used to instruct the second node to perform AGC configuration for one or more frequency domain units, which can solve the problem in the related art that one or multiple carriers require a certain amount of radio resources and time for AGC adjustment respectively, and can perform AGC configuration for frequency domain units with appropriate power settings more quickly, without consuming or with reduced consumption of time-frequency resources to determine AGC settings, thereby saving energy consumption and spectrum resources, and improving spectrum efficiency and processing speed.

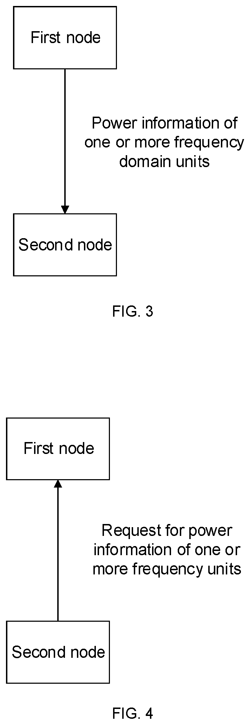

FIGS. 3 to 5 illustrate various nodes and transmission directions in a network. As shown in FIGS. 3 to 5, the two nodes from top to bottom are referred to as a first node and a second node, respectively. The first node and the second node are one of the following in a communication network: a user terminal (UE), an intermediate node serving a relay function, a base station (BS), a radio access network (RAN), a Mobility Management Entity (MME) network manager, a CU, a core network (CN), and a node for Device to Device (D2D for short) communication. The second node is one of the following in a communication network: a user terminal (UE), an intermediate node serving a relay function, a base station (BS), an intermediate node serving a relay function, and a node for Device to Device (D2D) communication.

In FIG. 3, the first node notifies the second node of power information of one or more frequency domain units. The power information may include at least one of the following: Transmitted Power; Power Spectrum Density (PSD for short); Effective Isotropic Radiated Power (EIRP for short); and Energy Per Resource Element (EPRE for short).

Further, the power information is power information associated with at least one of: a beam; a time unit; a modulation scheme; a waveform; a signal/channel; a MIMO rank; and an SU/MU transmission mode.

A beam is at least one of: a beam associated with an SS/PBCH block (SSB), a beam associated with a reference signal (RS), and a beam associated with a channel. The reference signal RS may be one of: a measurement reference signal (e.g., Channel-State Information-Reference Signal (CSI-RS) in an LTE or NR system), a demodulation reference signal (e.g., DMRS in an LTE or NR system), a phase tracking reference signal (e.g., Phase Tracking Reference Signal (PTRS) in an NR system), and a positioning reference signal (e.g., Positioning Reference Signal (PRS) in an NR system). The measurement reference signal is a reference signal used for measurement of a serving cell or neighboring cells, or a reference signal used for measuring a sum of interference and noise of cells other than a dominant interference; the demodulation reference signal is a reference signal used for demodulating data; the phase tracking reference signal is a reference signal used for phase estimation; and the positioning reference signal is a reference signal used for positioning a device. The manners of classifying reference signals may differ in different communication systems. For example, CRS in LTE can perform the above functions of demodulation and measurement. A channel may be one of: a control channel and a traffic channel.

A frequency domain unit may be in at least one of the following manners: one or more frequency bands, one or more component carriers, one or more RBs, one or more subcarrier spacings, and frequency domain resources corresponding to a serving cell.

Further, the first node determines a reference frequency domain unit for the second node in at least one of the following manners: the first node sends a message to the second node notifying a reference frequency domain unit; and the first node and the second node agree on a reference frequency domain unit.

The first node notifies the second node of power information of multiple frequency domain units, the power information including at least one of the following: Transmitted Power; Power Spectrum Density (PSD for short); Effective Isotropic Radiated Power (EIRP for short); and Energy Per Resource Element (EPRE for short).

A frequency domain unit may be at least one of the following: a frequency band defined in a radio spectrum, for example, operating bands in FR1 (Frequency Range 1, ranging from 410 MHz to 7125 MHz) defined in 3GPP TS 38.101-1 v18.3.0, operating bands in FR2 (Frequency Range 2, ranging from 24250 MHz to 52600 MHz) defined in TS 38.101-2 v18.3.0, and other frequency bands defined subsequently for these frequency ranges and frequency bands defined in other frequency ranges (e.g., above 52600 MHz); the frequency band may also be defined by a standards organization such as IEEE, for example, K band, S band, etc.

A component carrier of a certain bandwidth within a frequency band, for example, commonly used bandwidths include 5 MHz, 10 MHz, 15 MHz, 20 MHz, 25 MHz, 30 MHz, 35 MHz, 40 MHz, 45 MHz, 50 MHz, 55 MHz, 60 MHz, 70 MHz, 80 MHz, 90 MHz, 100 MHz corresponding to FR1, and other bandwidths introduced subsequently; a Bandwidth Part (BWP) composed of a certain number of Resource Blocks (RBs for short).

The first node receives power request information for multiple frequency domain units from the second node, and the first node notifies the second node of power information of the aforementioned multiple frequency domain units. Alternatively, the first node notifies power information of multiple frequency domain units. Alternatively, the first node receives power request information for multiple frequency domain units from the second node, and the first node notifies the second node of power information of multiple frequency domain units, where the multiple frequency domain units notified by the first node may be the multiple frequency domain units requested by the second node or may be different from the multiple frequency domain units requested by the second node.

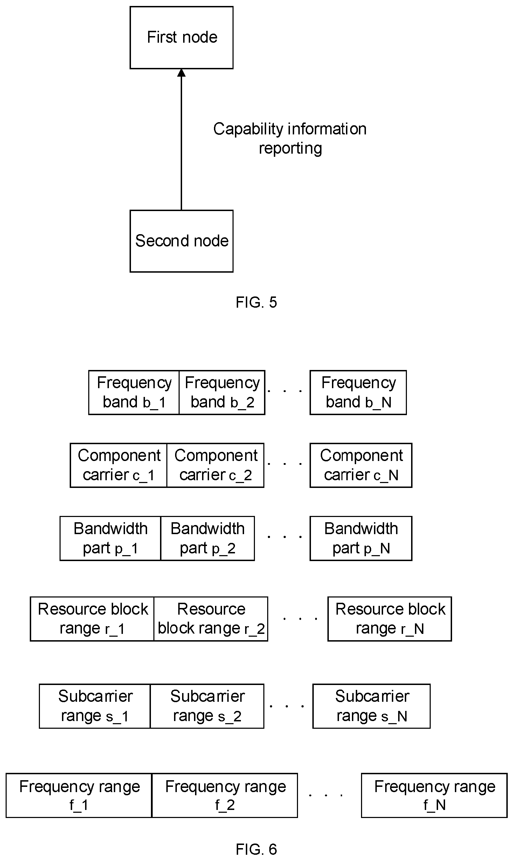

FIG. 6 is a schematic diagram of frequency domain units according to the present embodiment. As shown in FIG. 6, band b_1, ..., band b_N are frequency domain units divided at a granularity of band, and the definition of band may refer to the band definition in 3GPP TS 36.104 or 3GPP TS 38.104. CC c_1, ..., CC c_N are component carriers of one or more bands. RB range r_1, ..., RB range r_N are RB resource sets at a granularity of RB. SCS range s_1, ..., SCS range s_N are SCS resource sets at a granularity of SCS. Frequency range f_1, ..., frequency range f_N are frequency domain sets indicating specific frequency domain ranges, for example, indicating a start frequency and an end frequency, and the unit may be Hz, kHz, MHz, etc.

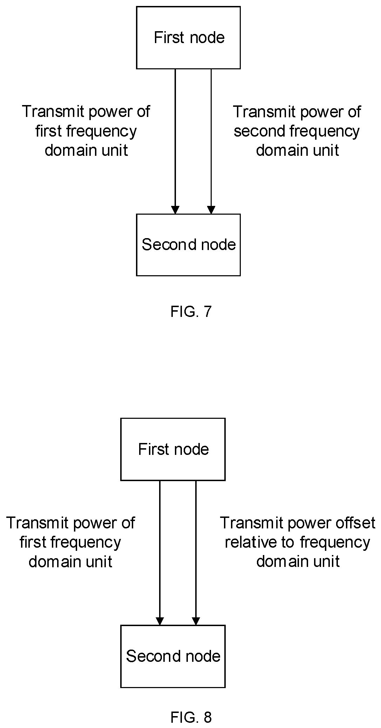

FIG. 7 is a first schematic diagram of power information notification according to the present embodiment. As shown in FIG. 7, the frequency domain unit may also be frequency domain resources corresponding to a cell of the second node.

The transmit power may be a linear value, for example, watts (W), milliwatts (mW), etc., and the transmit power may be a decibel value, for example, decibel-watts (dBW), decibel-milliwatts (dBm), etc. For example, the first node notifies that the transmit power of a first frequency domain unit is P_FU1 = a dBm, and the first node notifies that the transmit power of a second frequency domain unit is P_FU2 = b dBm.

FIG. 8 is a second schematic diagram of power information notification according to the present embodiment. As shown in FIG. 8, the first node notifying the second node of power information of one or more frequency domain units may be notifying the transmit power of one frequency domain unit and notifying power offsets of other frequency domain units relative to a reference frequency domain unit. For example, the first node notifies that the transmit power of the first frequency domain unit is P_FU1 = a dBm, and the first node notifies that the transmit power offset of the second frequency domain unit relative to the reference frequency domain unit is OFFSET_FU1_FU2 = b dB, which indicates that the corresponding transmit power of the second frequency domain unit is a+b dBm. In this embodiment, the reference frequency domain unit is the first frequency domain unit.

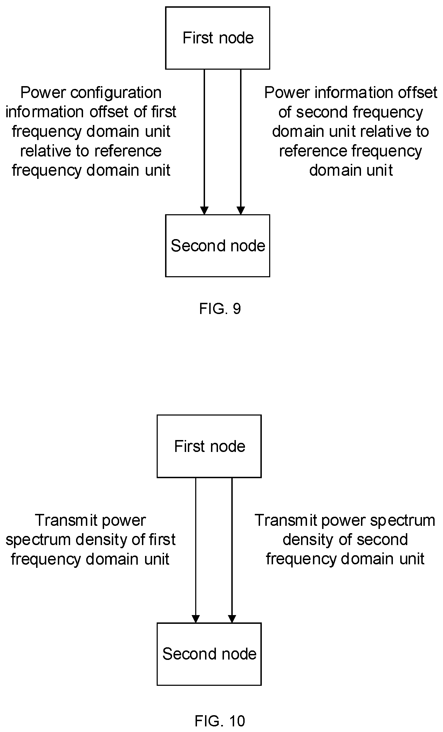

FIG. 9 is a third schematic diagram of power information notification according to the present embodiment. As shown in FIG. 9, the first node and the second node agree on a default or reference frequency domain unit, and the first node notifies the second node of offsets of one or more frequency domain units relative to the reference frequency domain unit. For example, a primary cell (PCell for short) of the second node, a primary secondary cell (PSCell for short) of the second node, or a cell that transmits a Synchronization Signal and PBCH block (SSB for short) to the second node, or a cell with a smallest or largest index value in a cell group to which the second node belongs.

The above does not exhaust all units of power and offsets, and combinations of units of power and offsets in the present disclosure are not limited to the above examples. The above describes the first node notifying the second node of power information of two frequency domain units, and the first node notifying the second node of power information of more than two frequency domain units is also within the protection scope of the present disclosure.

FIG. 10 is a fourth schematic diagram of power information notification according to the present embodiment. As shown in FIG. 10, the first node notifying the second node of power information of one or more frequency domain units may be notifying power spectrum density (PSD) of the frequency domain units. PSD is power per unit bandwidth, where the bandwidth unit may be Hz, kHz, MHz, a bandwidth corresponding to one or several subcarrier spacings (SCS), a bandwidth corresponding to one or several RBs, where one RB includes several subcarrier spacings, generally 12 subcarrier spacings, and other values are not excluded. The subcarrier spacing is 15000 Hz * 2^u, where u is an integer including 0, for example, {0, 1, 2, 3, 4, 5, 6, 7, 8, 9, 10}. Power units include watts (W), milliwatts (mW), decibel-watts (dBW), and decibel-milliwatts (dBm). Therefore, units of power spectrum density include W/Hz, W/kHz, W/MHz, mW/Hz, mW/kHz, mW/MHz, dBm/SCS, dBm/RB, etc. The first node notifies that the transmit power spectrum density of the first frequency domain unit is PSD_FU1, and the first node notifies that the transmit power spectrum density of the second frequency domain unit is PSD_FU2.

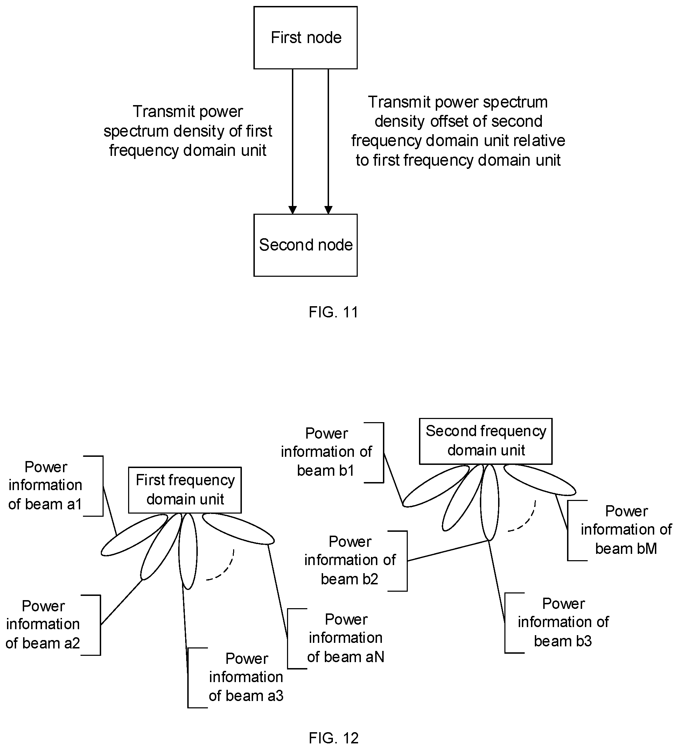

FIG. 11 is a fifth schematic diagram of power information notification according to the present embodiment. As shown in FIG. 11, the first node notifies the transmit power spectrum density PSD_FU1 of the first frequency domain unit, and the first node notifies that the offset of the transmit power spectrum density of the second frequency domain unit relative to the transmit power spectrum density of the reference frequency domain unit is OFFSET_FU1_FU2. In this example, the reference frequency domain unit is the first frequency domain unit, and in actual implementation, the reference frequency domain unit may be other frequency domain units other than the first frequency domain unit. The unit of the offset of the transmit power spectrum density may be a decibel value or a linear value. For example, the first node notifies that the transmit power spectrum density of the first frequency domain unit is a dBm/RB, and the first node notifies that the power spectrum density of the second frequency domain unit relative to the reference frequency domain unit (the first frequency domain unit in this example) is delta, then the corresponding transmit power spectrum density of the second frequency domain unit is a+delta dBm/RB. For another example, the first node notifies that the transmit power spectrum density of the first frequency domain unit is a mW/Hz, and the first node notifies that the power spectrum density of the second frequency domain unit relative to the reference frequency domain unit (the first frequency domain unit in this example) is delta, which indicates that the transmit power spectrum density of the first node in the second frequency domain unit is a+delta mW/Hz.

The above does not exhaust all units of power spectrum density and offsets, and combinations of units of power spectrum density and offsets are also within the protection scope of the present disclosure.

Further, the power information is power information associated with one or more beams.

FIG. 12 is a schematic diagram of correspondence between frequency domain units and power information according to the present embodiment. As shown in FIG. 12, the first frequency domain unit has corresponding multiple beams, and the beams and corresponding power information of the two frequency domain units are shown. Specifically, the first node notifies the second node of power information corresponding to one or more beams of one or more frequency domain units. Alternatively, the first node notifies the second node of power information corresponding to one or more beams associated with a certain signal or channel of one or more frequency domain units. In NR, a beam associated with a signal adopts a Transmission Configuration Indicator (TCI for short) or an SRS Resource Indicator (SRI for short) (Sounding Reference Signal, SRS for short) to associate a beam, and notifies the second node of power information corresponding to one or more beams of one or more frequency domain units. It should be noted that FIG. 12 does not show more relationships between beams and power information of frequency domain units.

Further, the power information is power information related to one or more modulation schemes.

Modulation schemes commonly used in current communication systems include BPSK, QPSK, 16QAM, 64QAM, 256QAM, and 1024QAM, and higher modulation schemes such as 4096QAM may be supported in the future.

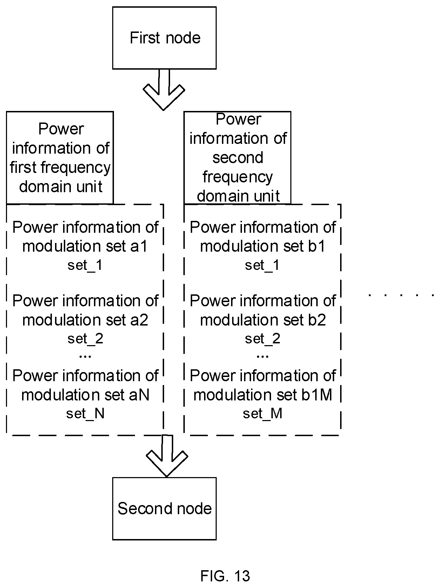

FIG. 13 is a sixth schematic diagram of power information notification according to the present embodiment. As shown in FIG. 13, the first node notifies the second node of power information corresponding to one or more modulation sets for multiple frequency domain units. When the first node classifies all modulation schemes into the same set, it indicates that the first node notifies the second node of power information corresponding to all modulation schemes of one frequency domain unit. When the first node classifies each modulation scheme into a separate set, it indicates that the first node notifies the second node of power information corresponding to one or more modulation schemes among multiple modulation schemes of one frequency domain unit.

The above does not exhaust all set combinations of modulation schemes, and other set combinations of modulation schemes are also within the protection scope of the present disclosure.

Further, the power information is power information related to waveforms.

Waveforms commonly used in communication systems include Orthogonal Time and Frequency Space (OTFS for short), Discrete Fourier Transform-spread-Orthogonal Frequency Division Multiplexing (DFT-s-OFDM for short), Cyclic Prefix Orthogonal Frequency Division Multiplexing (CP-OFDM for short), or other OFDM-based waveforms.

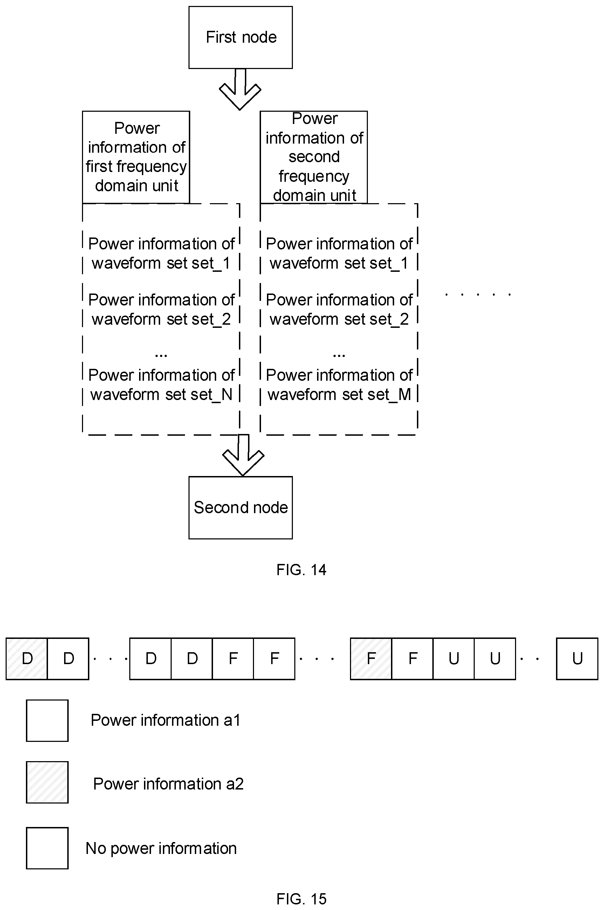

The first node notifies the second node of power information of one or more waveforms. FIG. 14 is a seventh schematic diagram of power information notification according to the present embodiment. As shown in FIG. 14, the first node classifies waveforms into sets, and the first node notifies power information corresponding to one or more waveform sets for multiple frequency domain units. When the first node classifies all waveforms into the same set, it indicates that the first node notifies the second node of power information corresponding to all waveforms of one frequency domain unit. When the first node classifies each waveform into a separate set, it indicates that the first node notifies the second node of power information corresponding to each of multiple waveforms of one frequency domain unit.

Further, the power information is power information related to a time pattern.

The first node notifies the second node of information that the power information is associated with specific time units. For example, the first node notifies power information of one or more time units. A time unit may be one or several slots, one or several Orthogonal Frequency Division Multiplexing (OFDM for short) symbols, one or several subframes, one or several radio frames, or a combination of the foregoing time units. A time unit may also be several seconds, several milliseconds, etc., in units of seconds (s), milliseconds (ms), etc. The time unit may also be one or more time units defined in a frame structure, for example, a frame structure period includes several uplink subframes (or slots), several downlink subframes (or slots), and several flexible subframes (or slots, or OFDM symbols), and the first node may notify power information of several subframes or slots or OFDM symbols or combinations thereof within the frame structure period.

FIG. 15 is a first schematic diagram of power information notification according to the present embodiment. As shown in FIG. 15, several time units are indicated within one frame structure period, power information of several time units marked as D is a1, power information of several time units marked as D is a2, power information of several time units marked as F is a1, power information of several time units marked as F is a2, and time units marked as U have no power information. FIG. 15 is only an example, and does not exhaust all frame structure configuration combinations, nor does it exhaust power information for each frame structure combination. For example, power information of some time units marked as D may also be configured, or power information of some or all time units marked as U may be configured.

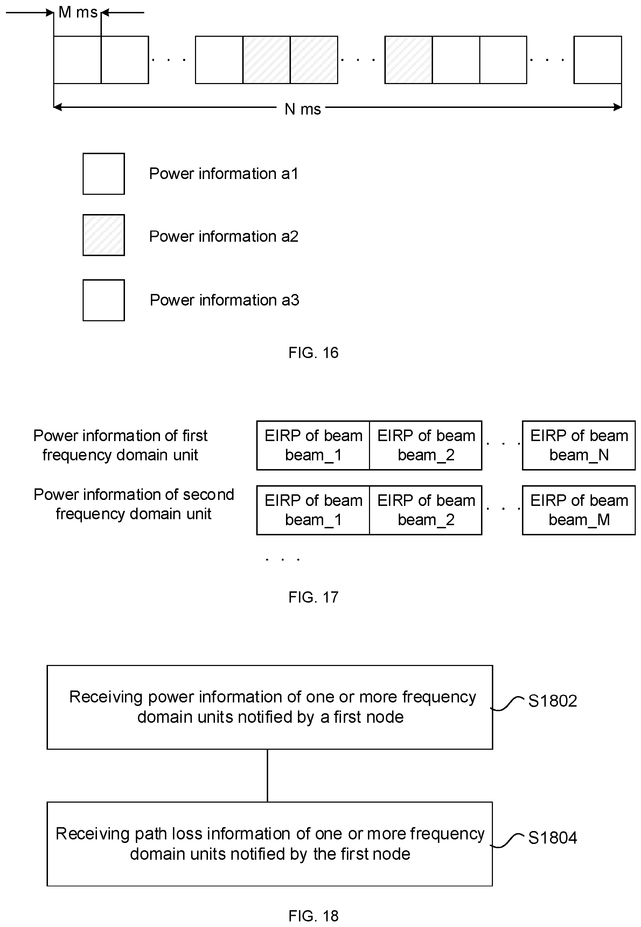

FIG. 16 is a second flowchart of power information notification according to the present embodiment. As shown in FIG. 16, the first node notifies the second node of power information of several time units according to time units, the time corresponding to one or several time units is M ms, optionally, M takes values such as 1, 1/2, 1/4, 1/8, 1/16, etc., and the total time in the figure is N ms, optionally, N takes values such as 20, 40, 80, 160, 320, 640, etc.

The time unit may also be the time corresponding to one or several slots, the time corresponding to one or several subframes, or the time corresponding to one or several OFDM symbols. The time corresponding to one or more radio frames.

Further, the power information is power information related to signals and channels. Signals and channels include synchronization signals, broadcast channels, reference signals, traffic channels, and control channels. Reference signals are further divided into reference signals for measurement, reference signals for demodulation, reference signals for measurement, and reference signals for estimating phase noise. For example, the first node notifies the second node of power information of signal/channel 1 of a first frequency domain unit, and the first node notifies the second node of power information of signal/channel 2 of a second frequency domain unit. Signal/channel 1 and signal/channel 2 are respectively at least one of the above signals and channels.

Further, the power information is power information related to transmission modes. Transmission modes may be divided into diversity transmission, multiplexing transmission, SU-MIMO transmission, MU-MIMO transmission, large CDD transmission, small CDD transmission, and non-CDD transmission.

The first node notifies the second node of power information related to one or more transmission modes of one or more frequency domain units. For example, the first node notifies the second node of power information of transmission mode 1 of a first frequency domain unit, and the first node notifies the second node of power information of transmission mode 2 of a second frequency domain unit. The above transmission mode 1 and transmission mode 2 are respectively at least one of the above transmission modes.

Further, the power information is power information in which power is grouped according to power ranges. For example, power information of several frequency domain units belongs to a range of group 1 (group_1), power information of several frequency domain units belongs to a range of group 2 (group_2), and so on.

The first node divides the power information into several levels according to a step value. Assuming that the transmit power of the first node is p_min dBm to p_max dBm, where p_min is the minimum transmit power and p_max is the maximum transmit power, the first node divides the transmit power into N levels according to the step value p_step. N = ceil((p_max - p_min)/p_step), where ceil() denotes rounding up, and preferably, p_step takes an integer value greater than 0. The groups are denoted as p_level_1, p_level_2, ..., p_level_N, respectively. The minimum transmit power, maximum transmit power, and step value may be implemented in one of the following ways to achieve the same understanding between the first node and the second node: the first node and the second node agree on the values of the above variables; the first node notifies the second node of the values of the above variables; and the first node and the second node determine the values of the above variables through a negotiation process. The negotiation process includes at least one of: the second node initiates, to the first node, a request for at least one of an expected minimum power, maximum power, and step value, and the first node replies to the second node with the values of the minimum power, maximum power, and step value.

The above takes transmit power as an example to illustrate that the first node notifies the second node of grouped power information of one or more frequency domain units in the form of groups.

The power information of one or more frequency domain units sent by the first node to the second node may also be EIRP of the frequency domain units. EIRP is equivalent radiated power taking beam gain into account. For a first frequency domain unit, the first node may notify power information of one or more EIRPs.

FIG. 17 is a third schematic diagram of power information notification according to the present embodiment. As shown in FIG. 17, the first node notifies the second node of power information of one or more frequency domain units, and the power information of one frequency domain unit includes EIRPs of one or more beams. The beam index here is a beam identified by the first node and the second node through beam training, a beam index number explicitly specified by the first node and the second node, or an implicit indication of the beam index by the first node and the second node. An example of implicit indication is that the first node indicates the EIRP of a beam associated with a Transmission Configuration Indicator (TCI for short) or an SRS Resource Indicator.

The first node notifies the second node of power information of one or more frequency domain units using at least one of the following signaling: Radio Resource Control (RRC for short) signaling; Media Access Control-Control Element (MAC CE for short); and Downlink Control Information (DCI for short).

In the present embodiment, a method for acquiring power information is further provided. FIG. 18 is a flowchart of the method for acquiring power information according to an embodiment of the present disclosure. As shown in FIG. 18, applied to a second node, the process includes the following steps:
step S1802, receiving power information of one or more frequency domain units notified by a first node; and/or
step S1804, receiving path loss information of one or more frequency domain units notified by the first node.

Through the above steps S1802 to S1804, the problem in the related art that a receiver needs time-frequency resources to adjust power settings can be solved. By notifying the power information and/or path loss information to the second node, the second node can receive data of one or multiple carriers without consuming time-frequency resources for power setting.

In the present embodiment, the above step S1802 may specifically include: sending a first request message to the first node, and receiving power information of the one or more frequency domain units returned by the first node; or receiving the power information of the one or more frequency domain units sent by the first node.

In the present embodiment, the above step S1804 may specifically include: sending a second request message to the first node, and receiving path loss information of the one or more frequency domain units returned by the first node; or receiving the path loss information of the one or more frequency domain units sent by the first node.

In one embodiment, the power information is actual power information or a power offset relative to a reference frequency domain unit; and/or the path loss information is actual path loss information or a path loss offset relative to the reference frequency domain unit.

In one embodiment, the reference frequency domain unit is a frequency domain unit for transmitting and receiving data with the second node; or the reference frequency domain unit is a frequency domain unit of a primary cell of the second node; or the reference frequency domain unit is a frequency domain unit of a cell having a smallest or largest component carrier index among the plurality of frequency domain units.

In one embodiment, the method further includes: sending a third request message for the reference frequency domain unit to the first node, and receiving the reference frequency domain unit notified by the first node, wherein the third request message carries identification information of the reference frequency domain unit; or sending a fourth request message for the reference frequency domain unit to the first node, wherein the fourth request message carries identification information of the reference frequency domain unit; or receiving the reference frequency domain unit notified by the first node.

In one embodiment, the method further includes: sending capability information to the first node, wherein the capability information indicates whether the second node needs time-frequency resources to perform power adjustment training for the one or more frequency domain units before performing power adjustment on the one or more frequency domain units.

In the present embodiment, the power information is power information associated with at least one of: a beam, a time unit, a modulation scheme, a waveform, a signal/channel, a MIMO rank, and a transmission mode.

In the present embodiment, the modulation scheme includes at least one of: BPSK, QPSK, 16QAM, 64QAM, 256QAM, 1024QAM, and 4096QAM; the waveform includes at least one of: Orthogonal Time Frequency Space (OTFS), Discrete Fourier Transform-spread-Orthogonal Frequency Division Multiplexing (DFT-s-OFDM), Cyclic Prefix Orthogonal Frequency Division Multiplexing (CP-OFDM), and other OFDM-based waveforms; the time unit includes at least one of: one or several slots, one or several OFDM symbols, one or several subframes, one or several radio frames, a time period, and one or more time units defined in a frame structure definition; the transmission mode includes at least one of: diversity transmission, multiplexing transmission, SU-MIMO transmission, MU-MIMO transmission, CDD transmission, and non-CDD transmission.

In the present embodiment, the power information includes at least one of: Transmit Power (TP), Power Spectrum Density (PSD), Effective Isotropic Radiated Power (EIRP), and Energy Per Resource Element (EPRE); and/or the frequency domain unit includes at least one of: one or more frequency bands, one or more component carriers, one or more Resource Blocks (RBs), one or more subcarrier spacings, and frequency domain resources corresponding to a serving cell.

In the embodiments of the present disclosure, after receiving the power information, the second node may perform automatic gain control (AGC) configuration for one or more frequency domain units according to the power information, which can solve the problem in the related art that one or multiple carriers require a certain amount of radio resources and time for AGC adjustment respectively, and can perform AGC configuration for frequency domain units with appropriate power settings more quickly, without consuming time-frequency resources to determine AGC settings, thereby saving energy consumption and spectrum resources, and improving spectrum efficiency and processing speed.

The second node notifies the first node of capability information of the second node, the capability information including at least one of: the second node receiving power information of one or more frequency domain units; and the second node configuring AGC for one or more frequency domain units.

The second node requests power information of one or more frequency domain units from the first node.

Further, the second node requesting power information of one or more frequency domain units from the first node includes a reference frequency domain unit. The reference frequency domain unit may also be a reference frequency domain unit agreed upon by the first node and the second node.

The second node reports a capability to the first node, the capability indicating that the second node can set AGC for one or more frequency domain units according to power information of different frequency domain units.

The second node reports capability information to the first node, and the second node can set AGC for one or more frequency domain units according to power information of one or more frequency domain units. When the second node learns the power information of one or more frequency domain units notified by the first node, the second node sets AGC for the one or more frequency domain units. For example, the second node may determine the AGC setting for a second frequency domain unit according to the AGC setting of a first frequency domain unit or the AGC setting of a default frequency domain unit or the AGC setting of a reference frequency domain unit, and an offset value of power information between the second frequency domain unit and the first frequency domain unit. For example, the power information of the first frequency domain unit is p_1 dBm, the power information of the second frequency domain unit relative to the first frequency domain unit is p_2 dBm, and the first node receives the AGC setting for the first frequency domain unit as AGC_FU1, then the second node sets the AGC for the second frequency domain unit as AGC_FU1 + (p_1 - p_2). Through the above operations, the second node can ensure that the ADC input levels of one or more frequency domain units are approximately at the same level.

The second node sends a request message to the first node, the request message including power information of one or more frequency domain units. The one or more frequency domain units are frequency domain units used for communication between the second node and the first node, or frequency domain units used for communication between the second node and other nodes (referred to as a third node herein).

The second node receives one or more pieces of power information and sets AGC for frequency domain units. Compared with the case where the second node does not receive power information of one or more frequency domain units from the first node, when the second node receives power information of one or more frequency domain units from the first node, the second node can receive data of multiple frequency domain units more quickly.

If the second node does not receive power information of one or more frequency domain units, the second node needs to use time-frequency resources to adjust AGC. When the second node receives power information of one or more frequency domain units, the second node can set AGC for the one or more frequency domain units as soon as possible.

For example, the second node maintains a connection with the first frequency domain unit of the first node, and the second node receives power information of a second frequency domain unit. The second frequency domain unit is a frequency domain unit for communication between the first node and the second node. Since the first frequency domain unit and the second frequency domain unit are used for communication between the first node and the second node, the second node determines the AGC setting for the second frequency domain unit according to the power information of the first frequency domain unit and the second frequency domain unit. For example, the power information of the first frequency domain unit is 30 dBm, and the power information of the second frequency domain unit is 33 dBm. The power information of the second frequency domain unit differs from that of the first frequency domain unit by 3 dB. Assuming that the AGC setting value of the second node for the first frequency domain unit is AGC_1, if AGC_1 is a decibel value, the AGC setting value of the second node for the second frequency domain unit is AGC_1 + (30-33); if AGC_1 is a linear value, the AGC setting value of the second node for the second frequency domain unit is AGC_2 = AGC_1 + db2lin(30-33), where db2lin() denotes an operator for converting a decibel value to a linear value. Similarly, if AGC_1 is a linear value, and the power information of the first frequency domain unit and the power information of the second frequency domain unit are decibel values, the power information needs to be first converted to linear values before calculating the AGC setting value for the second frequency domain unit and adjusting the AGC of the second power unit, and details are not described herein again.

Further, the power information of one or more frequency domain units received by the second node may also be frequency domain units of other nodes communicating with the second node other than the first node.

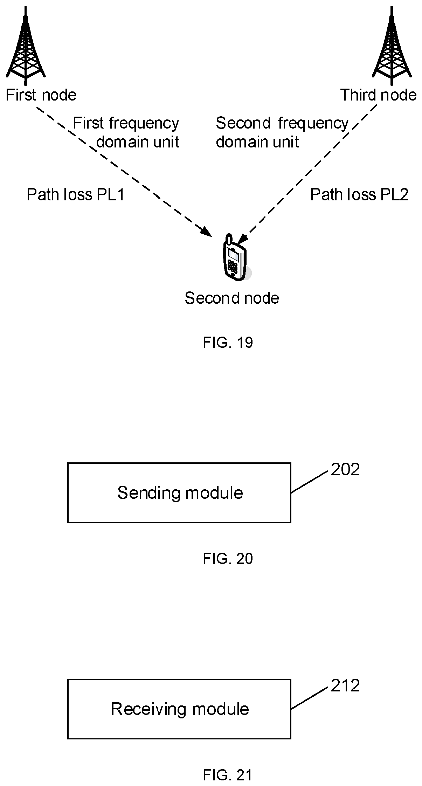

FIG. 19 is a schematic diagram of path loss measurement according to the present embodiment. As shown in FIG. 19, the second node obtains, through measurement, path loss between the second node and a third node and path loss between the second node and the first node. Assuming that the path loss between the second node and the first node is PL_21 (a decibel value), the path loss between the second node and the third node is PL_23 (a decibel value), and the power information of the frequency domain unit of the second node and the first node is p_1 dBm, and assuming that the second node receives an AGC setting value for the first frequency domain unit as AGC_1 (a linear value), then the second node, according to the power information p_2 dBm of the third node notified by the first node, can calculate that the AGC setting for the second frequency domain unit of the third node received by the second node is AGC_1 + db2lin(p_1 - p_2 + PL_21 - PL_23), where db2lin() denotes converting a decibel value to a linear value. If AGC, p_1, p_2, PL_21, and PL_23 are all decibel values, then the AGC setting for the second frequency domain unit of the third node received by the second node is AGC_1 + (p_2 - p_1 + PL_21 - PL_23). Other combinations of conversion between decibel values and linear values are not described herein again.

The second node notifies the capability to the first node through at least one of the following signaling: Radio Resource Control signaling, Media Access Control-Control Element (MAC CE for short), Uplink Control Information (UCI for short), and Non Access Stratum (NAS for short) signaling.

The first node sends one or more pieces of grouping information to the second node, and power information of frequency domain units in a group is equal or similar.

Power information being similar means that a difference between the power information of the frequency domain units in a group is less than a threshold value, and the threshold value may be agreed upon or negotiated through signaling.

The second node sends a request message to the first node, requesting grouping information of power information of frequency domain units from the first node.

The first node sends one or more pieces of grouping information to the second node, and path loss information of frequency domain units in a group is equal or similar.

Path loss information being similar means that a difference between path losses of frequency domain units in a group and the notified node is less than a threshold value, and the threshold value may be agreed upon or negotiated through signaling.

The second node sends a request message to the first node, requesting grouping information of path loss information of frequency domain units from the first node.

An example of signaling for capability reporting is as follows:

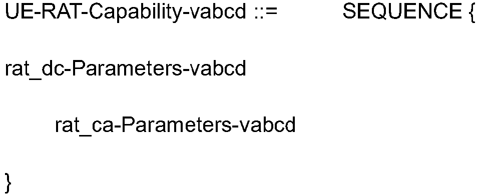

Here, RAT indicates a radio access technology, such as UTRA (UMTS), EUTRA (LTE), NR, and other access technologies.
- vabcd indicates that the protocol version corresponding to the radio access technology is abcd.

RAT_DC-Parameters-vabcd indicates an example of Dual Connectivity (DC for short) parameters of the RAT technology.

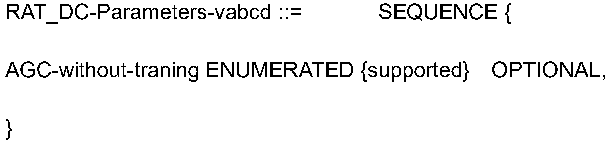

The above AGC-without-training indicates that when receiving multiple carriers, AGC of one or more carriers can be set without dedicated AGC training resources.

RAT_CA-Parameters-vabcd indicates an example of Carrier Aggregation (CA for short) parameters of the RAT technology.

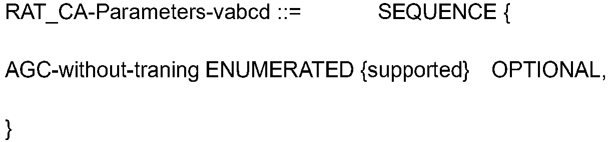

RAT_CA-Parameters-vabcd indicates Carrier Aggregation (CA for short) parameters of the RAT technology.

Further, the above signaling may also be associated with specific carrier combinations, which is not described herein again. The above signaling is a form of signaling for carrier aggregation or dual connectivity, and it may also be considered to split or combine UE-RAT-Capability-vabcd, RAT_DC-Parameters-vabcd, and RAT_CA-Parameters-vabcd in different forms. For example:

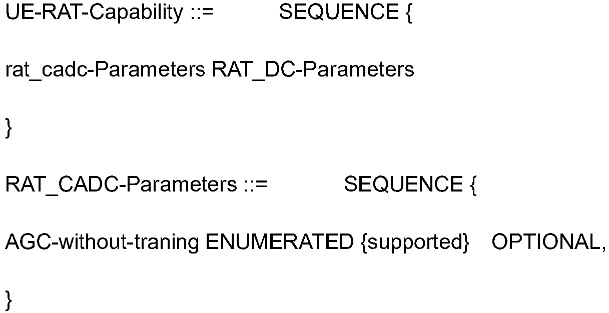

For another example,

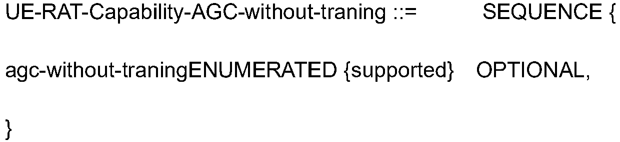

An example of signaling for requesting power information of one or more frequency domain units is as follows:

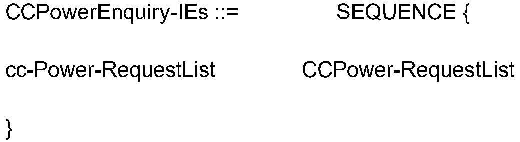

The above CCPowerEnquiry-IEs carries power request information of one or more frequency domain units.

The above CCPower-RequestList is a request list, and this request list lists power information of one or more frequency domain units to be obtained.

An example of signaling for requesting power grouping information is as follows:

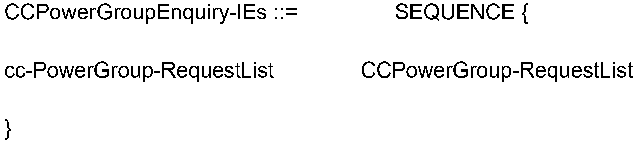

The above CCPowerGroupEnquiry-IEs carries request information for power grouping of one or more frequency domain units, and CCPowerGroup-RequestList therein is a request list, and this request list lists power grouping information of one or more frequency domain units to be obtained.

Alternatively, the second node only submits one power grouping request message, and the request message itself does not carry a specific list of frequency domain units, requesting the first node to notify power grouping information of frequency domain units.

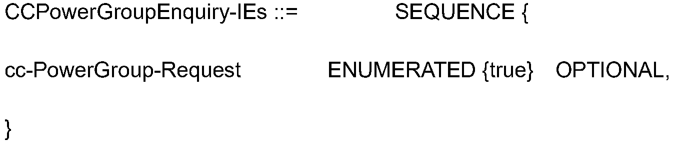

An example of signaling for requesting path loss grouping information is as follows:

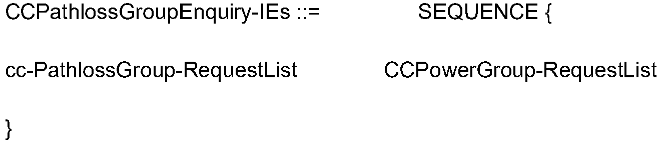

The above CCPathlossGroupEnquiry-IEs carries request information for path loss grouping of one or more frequency domain units, and CCPathlossGroup-RequestList therein is a request list, and this request list lists path loss grouping information of one or more frequency domain units to be obtained.

Alternatively, the second node only submits one path loss grouping request message, and the request message itself does not carry a specific list of frequency domain units, requesting the first node to notify path loss grouping information of frequency domain units.

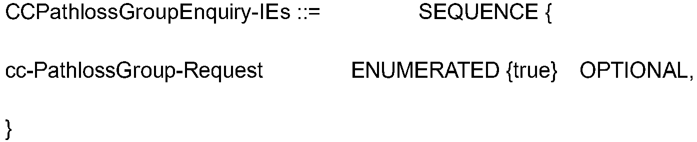

An example of signaling for requesting information of a reference frequency domain unit is as follows:

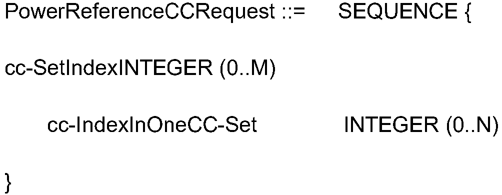

Through the above signaling, a node may request a reference frequency domain unit, specifically including a CCset (component carrier set) index and a cc-IndexInOneCC-Set (component carrier index within a component carrier set index), where M and N are integers greater than 0.

An example of signaling for notifying power information of one or more frequency domain units is as follows:

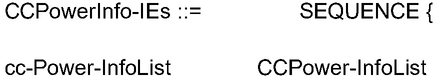

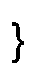

The above CCPowerInfo-IEs includes a list, and this list includes power information of one or more frequency domain units. The following is an implementation form of this list.

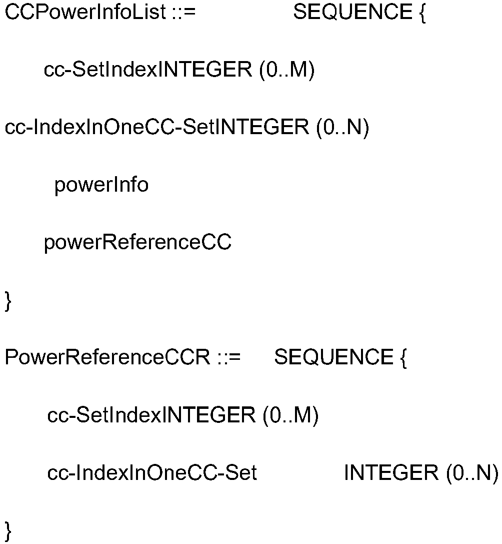

The above cc-SetIndex is an index of a frequency domain unit set, taking an integer value from 0 to M, where M is greater than 0.

The above cc-IndexInOneCC-Set is a frequency domain unit index within a frequency domain unit set, taking an integer value from 0 to N, where N is greater than 0.

The above powerInfo is specific power information, and the power information may be the aforementioned power value, power spectrum density, EPRE, EIRP, and other power quantities, and may also be an offset relative to a reference frequency domain unit.

An example of signaling for notifying frequency domain unit power grouping information is as follows:

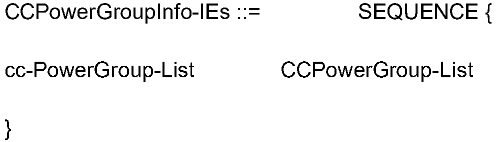

The above CCPowerGroupInfo-IEs includes a list, and this list includes one or more pieces of frequency domain unit power grouping information. The following is an example of signaling of this list.

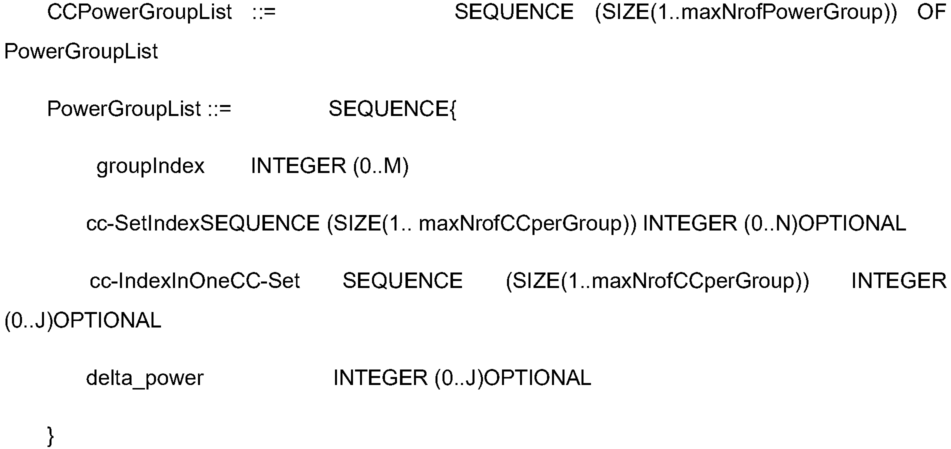

CCPowerGroupList includes a list of one or more power groups, and grouping information in the list is specifically indicated by PowerGroupList. PowerGroupList includes a group index. Optionally, PowerGroupList may also include a component carrier set index to indicate a component carrier set included in a power group. Optionally, PowerGroupList may also include a component carrier index within a component carrier set to indicate a component carrier index included in a power group or a component carrier index within a component carrier set. Optionally, PowerGroupList may also include a power offset delta_power, and this field is used to indicate that a difference between power information of frequency domain units in a group is less than or equal to delta_power.

An example of capability reporting, for example, capability reporting through MAC CE signaling.

A MAC CE reports a capability that a node can set one or more carriers without AGC training, as shown in Table 1.

**Table 1**

| | |
|---|---|
| AGC setting without AGC Training | True |

An example of a request message, for example, requesting path loss information of one or more frequency domain units through MAC CE signaling, as shown in Table 2.

**Table 2**

| | |
|---|---|
| CCset index1 | CC_index1 |
| CCset_index1 | CC_index2 |
| ... | ... |
| CCset_indexM | CC_index1 |
| ... | ... |
| CCset_indexM | CC_indexN |

A MAC CE requests power information of one or more frequency domain units, as shown in Table 3.

**Table 3**

| | |
|---|---|
| CCset index1 | CC_index1 |
| CCset_index1 | CC_index2 |
| ... | ... |
| CCset_indexM | CC_index1 |
| ... | ... |
| CCset_indexM | CC_indexN |

One row in Table 3 is divided into two fields, the first field indicates a CCset (component carrier set) index, and the second field indicates a CC (component carrier) index within a CCset.

Another request manner is to carry only CCset, as shown in Table 4.

**Table 4**

| |
|---|
| CCset index1 |
| CCset_index2 |
| ... |
| CCset_indexM |

Alternatively, the request carries only CC_index. For example, if there is only one CCset between the first node and the second node, CC_index is the CC_index of this CCset.

The above signaling form requests power information of several CCsets, and one CCset includes one or more CCs, which is a specific implementation of the frequency domain unit described herein.

Another request manner is to carry a reference frequency domain unit, as shown in Table 5.

**Table 5**

| | |
|---|---|
| CCset index1 | CC_index1 |
| CCset_index1 | CC_index2 |
| ... | ... |
| CCset_indexM | CC_index1 |
| ... | ... |
| CCset_indexM | CC_indexN |
| CCset_indexM_Ref | CC_index_Ref |

The power request information carrying a reference frequency domain unit may carry only CCset index or CC_index.

A MAC CE is signaling for one node to notify another node of a reference frequency domain unit, as shown in Table 6.

**Table 6**

| | |
|---|---|
| CCset index1 | CC_index1 |

Alternatively, one node notifies another node only of the set index where the reference frequency domain unit is located, as shown in Table 7.

**Table 7**

| |
|---|
| CCset index1 |

The reference frequency domain unit notified in Table 7 carries only one component carrier set, and the two nodes may agree that a CC with the smallest CC index in the CCset is the reference frequency domain unit, or agree that a primary serving cell in the CCset is the reference frequency domain unit. A MAC CE is signaling for one node to notify another node of power information of one or more frequency domain units, as shown in Table 8.

**Table 8**

| | | |
|---|---|---|
| CCset index_1 | CC_index_1 | Power_info_1 |
| CCset_index_1 | CC_index_2 | Power_info_2 |
| ... | ... | ... |
| CCset_index_M | CC_index_1 | ... |
| ... | ... | ... |
| CCset_index_M | CC_index_N | Power_info_K |

Power_info_1 to Power_info_K in Table 8 are power values or power spectrum densities or EPREs or EIRPs. Further, the power information may also be power information associated with beams, time units, modulation schemes, waveforms, and transmission modes. The power information may also be an index value of a power level, for example, power values are divided into several levels according to a step value, and each power level corresponds to an index.

As shown in Table 9, power ranges corresponding to different indexes are given.

**Table 9**

| | |
|---|---|
| Power_info_1 | Power_Range_1<= power<Power_Range_2 |
| Power_info_2 | Power_Range_2<= power<Power_Range_3 |
| ... | ... |
| Power_info_K | Power_Range_K<= power<Power_Range_K+1 |

Signaling for notifying power information of one or more frequency domain units for beams is shown in Table 10, and each row corresponds to one frequency domain unit and power information of one beam.

**Table 10**

| | | | |
|---|---|---|---|
| CCset index_1 | CC_index_1 | TCI_state_ID1 | Power_info_1 |
| CCset_index_1 | CC_index_2 | TCI_state_ID2 | Power_info_2 |
| ... | ... | ... | ... |
| CCset_index_M | CC_index_1 | ... | ... |
| ... | ... | ... | ... |
| CCset_index_M | CC_index_N | TCI_state_IDJ | Power_info_K |

A MAC CE requests power grouping of one or more frequency domain units, as shown in Table 11.

**Table 11**

| | |
|---|---|
| CCset index1 | CC_index1 |
| CCset_index1 | CC_index2 |
| ... | ... |
| CCset_indexM | CC_index1 |
| ... | ... |
| CCset_indexM | CC_indexN |

One row in Table 11 is divided into two fields, the first field indicates a CCset (component carrier set) index, and the second field indicates a CC (component carrier) index within a CCset.

Another request manner is to carry only CCset, for querying power group information of one or more frequency units, as shown in Table 12. Alternatively, the request signaling carries only CC_index. For example, if there is only one CCset between the first node and the second node, CC_index is the CC_index of this CCset. Or, if the first node and the second node do not define a CCset, CC_index is a CC_index without considering a CCset.

**Table 12**

| |
|---|
| CCset index1 |
| CCset_index 2 |
| ... |
| CCset_indexM |

The above signaling form requests power information of several CCsets, and one CCset includes one or more CCs, which is a specific implementation of the frequency domain unit described herein.

A MAC CE is signaling for one node to notify another node of power grouping of one or more frequency domain units, as shown in Table 13. The power grouping in Table 13 may also be power grouping associated with beams, time units, modulation schemes, waveforms, and transmission modes.

**Table 13**

| | | |
|---|---|---|
| CCset index_1 | CC_index_1 | Group_1 |
| CCset_index_1 | CC_index_2 | Group_2 |
| ... | ... | ... |
| CCset_index_M | CC_index_1 | ... |
| ... | ... | ... |
| CCset_index_M | CC_index_N | Group_K |

Power grouping of one or more frequency domain units may also be power grouping indicating component carrier sets. This notification manner notifies power grouping of frequency domain units by component carrier set, as shown in Table 14.

**Table 14**

| | |
|---|---|
| CCset index_1 | Group_1 |
| CCset_index_2 | Group_2 |
| ... | ... |
| CCset_index_M | Group_K |

In Table 14, the correspondence between CCset_index and Group is an example, and in actual cases, different CCset_indexes may correspond to the same Group.

The above Tables 1-14 only give fields related to the present disclosure, and actual implementations may also include padding bits.

For the above capability reporting, power information request, path loss information request, and other MAC CEs, LCID values are introduced for MAC CE transmission involved in the above Tables 1-14.

Table 15 shows MAC CE LCID values for capability reporting, power request, power information notification, reference frequency domain unit request, and reference frequency domain unit notification.

**Table 15**

| Codepoint/index | LCID values |
|---|---|
| Index1 | Capability reporting |
| Index2 | Power request |
| Index3 | Path loss request |
| Index4 | Reference frequency domain unit request |
| Index5 | Reference frequency domain unit notification |
| Index6 | Power information notification |
| Index7 | Path loss information notification |

The second node sends a capability reporting message to the first node through UCI, and reports the capability through PUCCH of 5G NR.

The second node uses a cyclic shift (CS) of PUCCH to notify the first node of the capability of supporting AGC setting for one or more frequency domain units.

The second node requests power information of one or more frequency domain units from the first node through UCI.

The second node transmits power information of one or more frequency domain units to the first node through a cyclic shift of PUCCH. Specifically, the cyclic shift of PUCCH may indicate the frequency domain units. An example is as follows. Signaling for requesting power information of one or more frequency domain units using different cyclic shifts is shown in Table 16.

**Table 16**

| Cyclic Shift (CS)1 | Cyclic Shift (CS)2 | ... | Cyclic Shift (CS)N |
|---|---|---|---|
| CC_set1 | CC_set2 | | CC_setN |

Further, the second node may use two or more sequences to report power information of one or more frequency domain units to the first node. For example, different cyclic shifts of a first sequence are used to indicate a CC_set, and a cyclic shift of a second sequence is used to indicate a CC_index.

The second node requests power information of one or more frequency domain units from the first node using several bits of UCI.

For example, the bits of UCI are divided into two types of fields, one type of field indicates a carrier set CCset index, and the other type of field indicates a CC index within the carrier set CCset.

Two fields are used to respectively indicate the CCset index and the CC index within the CCset, as shown in Table 17.

**Table 17**

| Bit combination of CCset index | Bit combination of CC index within CCset |
|---|---|
| aN-1, ...,a1, a0 | bM-1, ...,b1, b0 |

where ai (i ∈ [0, 1, ..., N-1]) and bj (j ∈ [0, 1, ..., M-1]) take values of 0 or 1, which represent 2^N set index values and 2^N index values of component carriers or cells (frequency domain units) within a set.

The second node sends an expected reference frequency domain unit to the first node through UCI.

The second node sends at least one of CC_set and CC_index to the first node using a cyclic shift of UCI or several bits of UCI. When there is one CC_set between the second node and the first node (network side), or the first node and the second node use cc_index to index different component carriers or cells (frequency domain units), the second node sends a cc_index to the first node to indicate an expected reference frequency domain unit. When there are two or more CC_sets between the second node and the first node, the second node sends a cc_set to the first node to indicate the cc_set (frequency domain unit set) where an expected reference frequency domain unit is located, and the first node and the second node determine, through an agreed manner, that a component carrier (frequency domain unit) with the smallest CC_index in the CC_set is the reference frequency domain unit.

The first node notifies power information of one or more frequency domain units through DCI.

Wherein one field of DCI is used to notify a frequency domain unit index, and another field of DCI is used to notify power information of the frequency domain unit.

Further, the field for notifying the frequency domain unit index may be further divided into a set index and a frequency domain unit index within the set.

Further, the first node notifies a reference frequency domain unit through one field of DCI. Specifically, it may notify at least one of the following: an index of the reference frequency domain unit, an index of a frequency domain unit where the reference frequency domain unit is located, and a cell group.

The power information of the frequency domain unit is notified by an index value. For example, the index value is represented by N bits, and the number of power levels that can be represented by these N bits is 2 to the power of N (2^N). These 2^N power levels may be agreed power levels or power levels agreed upon through interaction between nodes, for example, as shown in Table 10.

Power ranges of power levels are as shown in Table 18.

**Table 18**

| | |
|---|---|
| Power_level_1 | Power_Range_1 <= power<Power_Range_2 |
| Power_level_2 | Power_Range_2 <= power<Power_Range_3 |
| ... | ... |
| Power_level_K | Power_Range_K <= power<Power_Range_K+1 |

The second node sends a power grouping request for one or more frequency domain units to the first node using a cyclic shift (CS) of PUCCH.

Signaling for requesting power grouping of one or more frequency domain units using different cyclic shifts is as shown in Table 19.

**Table 19**

| Cyclic Shift (CS)1 | Cyclic Shift (CS)2 | ... | Cyclic Shift (CS)N |
|---|---|---|---|
| CC_set1 | CC_set2 | | CC_setN |

Further, the second node may use two or more sequences to request power grouping information of one or more frequency domain units from the first node. For example, different cyclic shifts of a first sequence are used to indicate a CC_set, and a cyclic shift of a second sequence is used to indicate a CC_index.

The second node sends a path loss grouping request for one or more frequency domain units to the first node using a cyclic shift (CS for short) of PUCCH.

Signaling for requesting path loss grouping of one or more frequency domain units using cyclic shifts is as shown in Table 20.

**Table 20**

| Cyclic Shift (CS)1 | Cyclic Shift (CS)2 | ... | Cyclic Shift (CS)N |
|---|---|---|---|
| CC_set1 | CC_set2 | | CC_setN |

Further, the second node may use two or more sequences to request path loss grouping information of one or more frequency domain units from the first node. For example, different cyclic shifts of a first sequence are used to indicate a CC_set, and a cyclic shift of a second sequence is used to indicate a CC_index.

The first node notifies power grouping information of one or more frequency domain units through DCI. Wherein one field of DCI is used to notify a frequency domain unit index, and another field of DCI is used to notify power grouping information of the frequency domain unit.

Further, the field for notifying the frequency domain unit index may be further divided into a set index and a frequency domain unit index within the set.

Further, the first node notifies a reference power offset delta_power through one field of DCI, to indicate that a power offset within a group is less than the aforementioned power offset delta_power.

The first node notifies path loss grouping information of one or more frequency domain units through DCI.

Wherein one field of DCI is used to notify a frequency domain unit index, and another field of DCI is used to notify path loss grouping information of the frequency domain unit.

Further, the field for notifying the frequency domain unit index may be further divided into a set index and a frequency domain unit index within the set.

Further, the first node notifies a path loss offset delta_pathloss of the path loss grouping through one field of DCI, indicating that a path loss offset within a group is less than the aforementioned path loss offset delta_pathloss.

The names and formats of the above signaling are only examples for illustrating the specific information used for requesting or notifying in the present embodiment, and do not impose any limitation on the present disclosure.

In the present embodiment, an apparatus for configuring power information is further provided. FIG. 20 is a block diagram of the apparatus for configuring power information according to an embodiment of the present disclosure. As shown in FIG. 20, applied to a first node, the apparatus includes:
a notifying module 202, configured to send, to a second node, at least one of: power information of one or more frequency domain units, and path loss information of one or more frequency domain units.

In the present embodiment, the notifying module 202 is further configured to: in response to a first request message for the power information of the one or more frequency domain units sent by the second node, send, to the second node, the power information of the one or more frequency domain units; or send, to the second node, the power information of the one or more frequency domain units; or in response to a second request message for the path loss information of the one or more frequency domain units sent by the second node, send, to the second node, the path loss information of the one or more frequency domain units; or send, to the second node, the path loss information of the one or more frequency domain units.

In the present embodiment, the power information is actual power information or a power offset relative to a reference frequency domain unit; the path loss information is actual path loss information or a path loss offset relative to the reference frequency domain unit.

In the present embodiment, the reference frequency domain unit is a frequency domain unit for transmitting and receiving data with the second node; or the reference frequency domain unit is a frequency domain unit of a primary cell of the second node; or the reference frequency domain unit is a frequency domain unit of a cell having a smallest or largest component carrier index among the plurality of frequency domain units.

In the present embodiment, the apparatus further includes:
a first request receiving module, configured to receive a third request message for the reference frequency domain unit sent by the second node, and notify the reference frequency domain unit to the second node, wherein the third request message carries identification information of the reference frequency domain unit; or
a second request receiving module, configured to receive a fourth request message for the reference frequency domain unit sent by the second node, wherein the fourth request message carries identification information of the reference frequency domain unit; or
a informing module, configured to inform the reference frequency domain unit to the second node.

In the present embodiment, the apparatus further includes:
a capability information receiving module, configured to receive capability information sent by the second node, wherein the capability information indicates whether the second node needs time-frequency resources to perform power adjustment training for the one or more frequency domain units before performing power adjustment on the one or more frequency domain units.

In the present embodiment, the power information is power information associated with at least one of: a beam, a time unit, a modulation scheme, a waveform, a signal/channel, a MIMO rank, and a transmission mode.

In the present embodiment, the modulation scheme includes at least one of: BPSK, QPSK, 16QAM, 64QAM, 256QAM, 1024QAM, and 4096QAM;
the waveform includes at least one of: Orthogonal Time Frequency Space (OTFS), Discrete Fourier Transform-spread-Orthogonal Frequency Division Multiplexing (DFT-s-OFDM), Cyclic Prefix Orthogonal Frequency Division Multiplexing (CP-OFDM), and other OFDM-based waveforms;
the time unit includes at least one of: one or several slots, one or several OFDM symbols, one or several subframes, one or several radio frames, a time period, and one or more time units defined in a frame structure definition;
the transmission mode includes at least one of: diversity transmission, multiplexing transmission, SU-MIMO transmission, MU-MIMO transmission, CDD transmission, and non-CDD transmission.

In the present embodiment, the power information includes at least one of: Transmit Power (TP), Power Spectrum Density (PSD), Effective Isotropic Radiated Power (EIRP), and Energy Per Resource Element (EPRE); and/or the frequency domain unit includes at least one of: one or more frequency bands, one or more component carriers, one or more Resource Blocks (RBs), one or more subcarrier spacings, and frequency domain resources corresponding to a serving cell.

In the present embodiment, the one or more frequency domain units are frequency domain units in a request message sent by the second node; and/or the power information is grouping information, the grouping information including one or more frequency domain unit groups, each frequency domain unit group including one or more frequency domain units, power of frequency domain units in a group is identical, or a power difference between any two frequency domain units in a group is less than a first preset value; and/or the path loss information is grouping information, the grouping information including one or more frequency domain unit groups, each frequency domain unit group including one or more frequency domain units, path loss of frequency domain units in a group is identical, or a path loss difference between any two frequency domain units in a group is less than a second preset value.

In the present embodiment, an apparatus for acquiring power information is further provided. FIG. 21 is a block diagram of the apparatus for acquiring power information according to an embodiment of the present disclosure. As shown in FIG. 21, applied to a second node, the apparatus includes:
a power information receiving module 212, configured to receive power information of one or more frequency domain units notified by a first node; and/or receive path loss information of one or more frequency domain units notified by the first node.

In the present embodiment, the power information receiving module 212 is further configured to: send a first request message to the first node, and receive power information of the one or more frequency domain units returned by the first node; or receive the power information of the one or more frequency domain units sent by the first node; and/or send a second request message to the first node, and receive path loss information of the one or more frequency domain units returned by the first node; or receive the path loss information of the one or more frequency domain units sent by the first node.

In the present embodiment, the power information is actual power information or a power offset relative to a reference frequency domain unit; and/or the path loss information is actual path loss information or a path loss offset relative to the reference frequency domain unit.

In the present embodiment, the reference frequency domain unit is a frequency domain unit for transmitting and receiving data with the second node; or the reference frequency domain unit is a frequency domain unit of a primary cell of the second node; or the reference frequency domain unit is a frequency domain unit of a cell having a smallest or largest component carrier index among the plurality of frequency domain units.

In the present embodiment, the apparatus further includes:
a first request sending module, configured to send a third request message for the reference frequency domain unit to the first node, and receive the reference frequency domain unit notified by the first node, wherein the third request message carries identification information of the reference frequency domain unit; or
a second request sending module, configured to send a fourth request message for the reference frequency domain unit to the first node, wherein the fourth request message carries identification information of the reference frequency domain unit; or
a notification receiving module, configured to receive the reference frequency domain unit notified by the first node.

In the present embodiment, the apparatus further includes:
a capability information sending module, configured to send capability information to the first node, wherein the capability information indicates whether the second node needs time-frequency resources to perform power adjustment training for the one or more frequency domain units before performing power adjustment on the one or more frequency domain units.

In the present embodiment, the power information is power information associated with at least one of: a beam, a time unit, a modulation scheme, a waveform, a signal/channel, a MIMO rank, and a transmission mode.

In the present embodiment, the modulation scheme includes at least one of: BPSK, QPSK, 16QAM, 64QAM, 256QAM, 1024QAM, and 4096QAM;
the waveform includes at least one of: Orthogonal Time Frequency Space (OTFS), Discrete Fourier Transform-spread-Orthogonal Frequency Division Multiplexing (DFT-s-OFDM), Cyclic Prefix Orthogonal Frequency Division Multiplexing (CP-OFDM), and other OFDM-based waveforms;
the time unit includes at least one of: one or several slots, one or several OFDM symbols, one or several subframes, one or several radio frames, a time period, and one or more time units defined in a frame structure definition;
the transmission mode includes at least one of: diversity transmission, multiplexing transmission, SU-MIMO transmission, MU-MIMO transmission, CDD transmission, and non-CDD transmission.

In the present embodiment, the power information includes at least one of: Transmit Power (TP), Power Spectrum Density (PSD), Effective Isotropic Radiated Power (EIRP), and Energy Per Resource Element (EPRE); and/or the frequency domain unit includes at least one of: one or more frequency bands, one or more component carriers, one or more Resource Blocks (RBs), one or more subcarrier spacings, and frequency domain resources corresponding to a serving cell.

The embodiments of the present disclosure further provide a computer-readable storage medium, having a computer program stored therein, wherein the computer program is configured to, when running, execute steps of the method in any of the above method embodiments.

In an exemplary embodiment, the computer-readable storage medium may include, but is not limited to: a USB flash drive, a Read-Only Memory (ROM), a Random Access Memory (RAM), a removable hard disk, a magnetic disk, or an optical disk, and other various media that can store computer programs.

The embodiments of the present disclosure further provide an electronic device, including a memory and a processor, the memory having a computer program stored therein, the processor being configured to run the computer program to execute steps of the method in any of the above method embodiments.

In an exemplary embodiment, the electronic device may further include a transmission device and an input/output device, wherein the transmission device is connected to the processor, and the input/output device is connected to the processor.

For specific examples in the present embodiment, reference may be made to the examples described in the above embodiments and exemplary implementations, and the present embodiment will not be described herein again.

It will be apparent to those skilled in the art that the above modules or steps of the present disclosure may be implemented by a general-purpose computing device, and they may be centralized on a single computing device or distributed over a network composed of multiple computing devices. They may be implemented by program codes executable by a computing device, so that they may be stored in a storage device and executed by a computing device, and in some cases, the steps shown or described may be performed in an order different from that described herein, or they may be fabricated as individual integrated circuit modules, or multiple modules or steps among them may be fabricated as a single integrated circuit module. Thus, the present disclosure is not limited to any specific combination of hardware and software.

The above description is only preferred embodiments of the present disclosure and is not intended to limit the present disclosure. For those skilled in the art, the present disclosure may have various modifications and changes. Any modifications, equivalent substitutions, improvements, etc. made within the principle of the present disclosure shall be included in the protection scope of the present disclosure.

## Claims

1. A method for configuring power information, applied to a first node, the method comprising:
sending, to a second node, at least one of: power information of one or more frequency domain units, and path loss information of one or more frequency domain units.

2. The method according to claim 1, wherein sending, to the second node, at least one of: the power information of the one or more frequency domain units, and the path loss information of the one or more frequency domain units comprises:
in response to a first request message for the power information of the one or more frequency domain units sent by the second node, sending, to the second node, the power information of the one or more frequency domain units; or
sending, to the second node, the power information of the one or more frequency domain units; or
in response to a second request message for the path loss information of the one or more frequency domain units sent by the second node, sending, to the second node, the path loss information of the one or more frequency domain units; or
sending, to the second node, the path loss information of the one or more frequency domain units.

3. The method according to claim 1, wherein,
the power information is actual power information or a power offset relative to a reference frequency domain unit;
the path loss information is actual path loss information or a path loss offset relative to the reference frequency domain unit.

4. The method according to claim 3, wherein,
the reference frequency domain unit is a frequency domain unit for transmitting and receiving data with the second node; or
the reference frequency domain unit is a frequency domain unit of a primary cell of the second node; or
the reference frequency domain unit is a frequency domain unit of a cell having a smallest or largest component carrier index of the plurality of frequency domain units.

5. The method according to claim 3, wherein the method further comprises:
receiving a third request message for the reference frequency domain unit sent by the second node, and notifying the reference frequency domain unit to the second node, wherein the third request message carries identification information of the reference frequency domain unit; or
receiving a fourth request message for the reference frequency domain unit sent by the second node, wherein the fourth request message carries identification information of the reference frequency domain unit; or
notifying the reference frequency domain unit to the second node.

6. The method according to claim 1, wherein the method further comprises:
receiving capability information sent by the second node, wherein the capability information indicates whether the second node needs time-frequency resources to perform power adjustment training for the one or more frequency domain units before performing power adjustment on the one or more frequency domain units.

7. The method according to any one of claims 1 to 6, wherein the power information is power information associated with at least one of: a beam, a time unit, a modulation scheme, a waveform, a signal/channel, a Multiple Input Multiple Output (MIMO) rank, and a transmission mode.

8. The method according to claim 7, wherein,
the modulation scheme comprises at least one of: Binary Phase Shift Keying (BPSK), Quadrature Phase Shift Keying (QPSK), 16QAM, 64QAM, 256QAM, 1024QAM, and 4096QAM;
the waveform comprises at least one of: Orthogonal Time Frequency Space (OTFS), Discrete Fourier Transform-spread-Orthogonal Frequency Division Multiplexing (DFT-s-OFDM), Cyclic Prefix Orthogonal Frequency Division Multiplexing (CP-OFDM), and other OFDM-based waveforms;
the time unit comprises at least one of: one or several slots, one or several OFDM symbols, one or several subframes, one or several radio frames, a time period, and one or more time units defined in a frame structure definition;
the transmission mode comprises at least one of: diversity transmission, multiplexing transmission, Single User Multiple Input Multiple Output (SU-MIMO) transmission, Multi-User Multiple Input Multiple Output (MU-MIMO) transmission, Cyclic Delay Diversity (CDD) transmission, and non-CDD transmission.

9. The method according to any one of claims 1 to 6, wherein,
the power information comprises at least one of: Transmit Power (TP), Power Spectrum Density (PSD), Effective Isotropic Radiated Power (EIRP), and Energy Per Resource Element (EPRE); and/or
the frequency domain unit comprises at least one of: one or more frequency bands, one or more component carriers, one or more Resource Blocks (RBs), one or more subcarrier spacings, and frequency domain resources corresponding to a serving cell.

10. The method according to any one of claims 1 to 6, wherein,
the one or more frequency domain units are frequency domain units in a request message sent by the second node; and/or
the power information is grouping information, wherein the grouping information comprising one or more frequency domain unit groups, each frequency domain unit group comprising one or more frequency domain units, power of frequency domain units in a group is identical, or a power difference between any two frequency domain units in a group is less than a first preset value; and/or
the path loss information is grouping information, wherein the grouping information comprising one or more frequency domain unit groups, each frequency domain unit group comprising one or more frequency domain units, path loss of frequency domain units in a group is identical, or a path loss difference between any two frequency domain units in a group is less than a second preset value.

11. A method for acquiring power information, applied to a second node, the method comprising:
receiving power information of one or more frequency domain units notified by a first node; and/or
receiving path loss information of one or more frequency domain units notified by the first node.

12. The method according to claim 11, wherein receiving the power information of the one or more frequency domain units notified by the first node; and/or receiving the path loss information of the one or more frequency domain units notified by the first node comprises:
sending a first request message to the first node, and receiving the power information of the one or more frequency domain units returned by the first node; or
receiving the power information of the one or more frequency domain units sent by the first node; and/or
sending a second request message to the first node, and receiving the path loss information of the one or more frequency domain units returned by the first node; or
receiving the path loss information of the one or more frequency domain units sent by the first node.

13. The method according to claim 12, wherein,
the power information is actual power information or a power offset relative to a reference frequency domain unit; and/or
the path loss information is actual path loss information or a path loss offset relative to the reference frequency domain unit.

14. The method according to claim 13, wherein,
the reference frequency domain unit is a frequency domain unit for transmitting and receiving data with the second node; or
the reference frequency domain unit is a frequency domain unit of a primary cell of the second node; or
the reference frequency domain unit is a frequency domain unit of a cell having a smallest or largest component carrier index among the plurality of frequency domain units.

15. The method according to claim 13, wherein the method further comprises:
sending a third request message for the reference frequency domain unit to the first node, and receiving the reference frequency domain unit notified by the first node, wherein the third request message carries identification information of the reference frequency domain unit; or
sending a fourth request message for the reference frequency domain unit to the first node, wherein the fourth request message carries identification information of the reference frequency domain unit; or
receiving the reference frequency domain unit notified by the first node.

16. The method according to claim 11, wherein the method further comprises:
sending capability information to the first node, wherein the capability information indicates whether the second node needs time-frequency resources to perform power adjustment training for the one or more frequency domain units before performing power adjustment on the one or more frequency domain units.

17. The method according to any one of claims 11 to 16, wherein the power information is power information associated with at least one of: a beam, a time unit, a modulation scheme, a waveform, a signal/channel, a Multiple Input Multiple Output (MIMO) rank, and a transmission mode.

18. The method according to claim 17, wherein,
the modulation scheme comprises at least one of: Binary Phase Shift Keying (BPSK), Quadrature Phase Shift Keying (QPSK), 16QAM, 64QAM, 256QAM, 1024QAM, and 4096QAM; the waveform comprises at least one of: Orthogonal Time Frequency Space (OTFS), Discrete Fourier Transform-spread-Orthogonal Frequency Division Multiplexing (DFT-s-OFDM), Cyclic Prefix Orthogonal Frequency Division Multiplexing (CP-OFDM), and other OFDM-based waveforms;
the time unit comprises at least one of: one or several slots, one or several OFDM symbols, one or several subframes, one or several radio frames, a time period, and one or more time units defined in a frame structure definition;
the transmission mode comprises at least one of: diversity transmission, multiplexing transmission, Single User Multiple Input Multiple Output (SU-MIMO) transmission, Multi-User Multiple Input Multiple Output (MU-MIMO) transmission, Cyclic Delay Diversity (CDD) transmission, and non-CDD transmission.

19. The method according to any one of claims 16 to 25, wherein,
the power information comprises at least one of: Transmit Power (TP), Power Spectrum Density (PSD), Effective Isotropic Radiated Power (EIRP), and Energy Per Resource Element (EPRE); and/or
the frequency domain unit comprises at least one of: one or more frequency bands, one or more component carriers, one or more Resource Blocks (RBs), one or more subcarrier spacings, and frequency domain resources corresponding to a serving cell.

20. An apparatus for configuring power information, applied to a first node, the apparatus comprising:
a power information sending module, configured to send, to a second node, at least one of: power information of one or more frequency domain units, and path loss information of one or more frequency domain units.

21. An apparatus for acquiring power information, applied to a second node, the apparatus comprising:
a power information receiving module, configured to receive power information of one or more frequency domain units notified by a first node; and/or receive path loss information of one or more frequency domain units notified by the first node.

22. A computer-readable storage medium, having a computer program stored therein, wherein the computer program is configured to, when running, execute the method according to any one of claims 1 to 10, and 11 to 19.

23. An electronic device, comprising a memory and a processor, wherein the memory stores a computer program, and the processor is configured to run the computer program to execute the method according to any one of claims 1 to 11, and 11 to 19.
